# EUROPÄISCHE PATENTSCHRIFT

(11) **EP 2 422 246 B1**
(45) Veröffentlichungstag und Bekanntmachung des Hinweises auf die Patenterteilung: **16.03.2016**
(21) Anmeldenummer: 10711163.5
(22) Anmeldetag: 29.03.2010
(51) Int. Cl.: G05B 13/04, G05B 13/02, F23G 5/50, F23N 5/00, G06N 3/08

(54) **REGELSYSTEM**
Control system
Circuit de commande

(30) Priorität: 22.04.2009 EP 09005626
(43) Veröffentlichungstag der Anmeldung: 29.02.2012
(73) Patentinhaber: STEAG Powitec GmbH, 45219 Essen (DE)
(72) Erfinder: WINTRICH, Franz, 45309 Essen (DE); STEPHAN, Volker, 99976 Hüpstedt (DE); SCHAFFERNICHT, Erich, 98693 Ilmenau (DE); STEEGE, Florian, 99089 Erfurt (DE)
(74) Vertreter: Held, Thomas
(86) Internationale Anmeldenummer: PCT/EP2010/001969
(87) Internationale Veröffentlichungsnummer: WO 2010/121695

(56) Entgegenhaltungen:
- EP-A1- 0 554 479
- EP-A1- 1 396 770
- EP-A1- 2 048 553
- EP-B1- 0 777 881
- DE-A1-102005 010 477
- DE-C2- 3 024 275
- US-B1- 6 404 581
- KHARE V R ET AL: "Co-evolutionary Modular Neural Networks for Automatic Problem Decomposition" EVOLUTIONARY COMPUTATION, 2005. THE 2005 IEEE CONGRESS ON EDINBURGH, SCOTLAND, UK 02-05 SEPT. 2005, PISCATAWAY, NJ, USA,IEEE LNKD- DOI:10.1109/CEC.2005.1555032, Bd. 3, 2. September 2005 (2005-09-02), Seiten 2691-2698, XP010861726 ISBN: 978-0-7803-9363-9
- RÖSCHEISEN M ET AL: "Neural control for rolling mills: Incorporating domain theories to overcome data deficiency" 19930101, [Online] 1. Januar 1993 (1993-01-01), Seiten 1-8, XP007914225 Gefunden im Internet: URL:http://citeseerx.ist.psu.edu/viewdoc/d ownload?doi=10.1.1.15.9259&rep= rep1&type=ps>

## Beschreibung

Die Erfindung betrifft ein Regelsystem mit den Merkmalen des Oberbegriffs des Anspruches 1.

Ein hierarchisches Regelsystem dieser Art ist aus der DE 30 24 275 C2 bekannt. Das auf die Regelstrecke (erste Ebene) einwirkende Prozessleitsystem (zweite Ebene) ist hinsichtlich der Stellvorrichtungen in verschiedene Teilschleifen mit jeweils einem Teilschleifen-Steuergerät unterteilt. In der dritten Ebene beschafft sich ein Prozesssignalregler den Istwert des Prozesses, und ein Hauptsteuergerät gibt den Teilschleifen-Steuergeräten die Stellgrößen vor. Ein Hauptrechner (vierte Ebene) speichert alle verfügbaren Daten, um bei einem Ausfall eines Teilschleifen-Steuergeräts dieses zu emulieren.

Komplexe Realwelt-Prozesse zeichnen sich durch verschiedene Eigenschaften aus, die eine Regelung bzw. Optimierung erschweren. Die Prozesse sind zunächst allein durch die Anzahl der verfügbaren Mess-, Regel- und Stellgrößen sehr komplex. Darüber hinaus sind diese Prozesse meist zeitvariant, d.h., aufgrund externer und interner Einflüsse (Jahreszeiten, Materialqualitäten, Betriebszustände) entstehen zeitlich wechselnde Zusammenhänge in den Prozessdaten. Ein Regelsystem muss daher adaptiv sein und ständig angepasst werden.

Bei einem aus der EP 1 396 770 B1 bekannten Regelsystem werden im Hintergrund Prozessmodelle der Regelstrecke (Simulatoren) entwickelt und dabei trainiert. Sofern das beste neue Prozessmodell eine höherer Genauigkeit der Prognosen als das im aktiven Regler eingesetzte Prozessmodell liefert, wird letzteres durch das beste neue Prozessmodell ersetzt, wodurch ein neuer aktiver Regler entsteht. Das bisher eingesetzte und die anderen neuen Prozessmodelle werden verworfen.

Die EP 2 048 553 A1 offenbart ein Regelsystem, bei dem zukünftige Stellaktionen basierend auf Prozessmodellen und Wahrscheinlichkeitsverteilungen ermittelt werden.

US 6 404 581 B1 offenbart ein Regelsystem, bei dem ein aktiver Regler aus einer Menge von Reglern ausgewählt wird.

Der vorliegenden Erfindung liegt die Aufgabe zugrunde, ein Regelsystem der eingangs genannten Art zu verbessern. Diese Aufgabe wird durch ein Regelsystem mit den Merkmalen des Anspruches 1 gelöst. Weitere vorteilhafte Ausgestaltungen sind Gegenstand der Unteransprüche.

Ausgangspunkt ist der komplexe, also durch verschiedenste Wechselwirkungen äußerst nicht-triviale Zusammenhang zwischen Ursache und Winkung im Prozess. Die hierarchische Aufteilung des Regelsystems in verschiedene Ebenen erlaubt ein besseres Verständnis des Prozesses und eine optimierte Adaption des Regelsystems an den aktuelle Zustand des Prozesses.

Zum Einen können dadurch aktive Regler schneller adaptiert werden, indem der Hauptregler im Hintergrund verschiedene Regler prüft und dabei früher aktive Regler berücksichtigt. Damit wird vermieden, dass durch ein langes Nachtraining des aktiven Reglers dieser erst zur Verfügung steht, wenn er schon nicht mehr wegen einer Änderung des Prozesses genutzt werden kann. Für die Regelung wird vorzugsweise ein rekurrentes neuronales Netzwerk (bzw. mehrere miteinander verknüpfte Netzwerke) verwendet, welches mittels eines evolutionären Ansatzes trainiert wird, der als Optimierungskriterium die mittlere Regelabweichung minimiert.

Bei einer entsprechenden Betriebsdauer des Regelsystems liegen ausreichend viele Daten vor, um ausreichend gute Simulatoren zu schaffen, welche die Regelstrecke mit unterschiedlich konfigurierten Prozessmodellen simulieren. Mit dem Einsatz von Simulatoren kann eine Menge von alten und neuen Reglern getestet werden, bevor ein Einsatz an der Regelstrecke erfolgt. Eine Störung des laufenden Betriebs des Regelkreises wird dadurch vermieden. Die Verwendung mehrerer Simulatoren reduziert Fehler und Abweichungen vom realen Verhalten der Regelstrecke und berücksichtigt unterschiedliche Situationen besser. Ein entsprechend entwickelter Regler beruht somit auf mehreren Prozessmodellen. Es wird vorzugsweise derjenige Regler gesucht, mit dem die Sollwerte am besten zu erreichen sind. Die Beibehaltung früher aktiver Regler erleichtert bei einer Wiederkehr bestimmter Zustände und Zeitverläufe die Entwicklung des besten Reglers. Zudem werden Rechenzeiten und -leistungen gespart. Das Training der Simulatoren und die Entwicklung eine Menge von Reglern wird von einem Hauptregler vorgenommen und überwacht, vorzugsweise in bestimmten Zyklen, die auf die Dynamik der Regelstrecke abgestimmt sind. Optimierungen des Regelkreises sind durch zusätzliche Informationen, insbesondere Bildverarbeitung, möglich und gehen beispielsweise in die Simulatoren und/oder in die Entwicklung der Regler und/oder in die Sollwerte ein.

Zum Zweiten kann die Regelung unter verschiedenen aktiven Reglern aufgeteilt werden, welchen Teilprozesse des komplexen Prozesses zugeordnet sind. Die Aufteilung der Regelung ändert sich vorzugsweise dynamisch mittels einer automatischen Problemdekomposition. Der Hauptregler analysiert den Datenraum des Prozesses und bildet Regler für Teilbereiche, die in sich stärkere Zusammenhänge zeigen.

Zum Dritten können, wenn bei geringen Prozesserfahrungen schwach oder gar nicht vertretene Regionen im Datenraum auftreten, diese Regionen mit künstlichen Datenpunkten gefüllt oder abgegrenzt werden.

Die Erfindung kann bei verschiedenen stationären thermodynamischen Anlagen, insbesondere Kraftwerken, Müllverbrennungsanlagen und Zementwerken, eingesetzt werden. Ein Einsatz des erfindungsgemäßen Regelsystems ist auch in anderen technischen Gebieten denkbar. So ist die Erfindung nicht auf thermische Prozesse beschränkt, sondern kann auch allgemein in der mechanischen oder chemischen Verfahrenstechnik angewendet werden, beispielsweise in Raffinerien oder Spaltöfen. Prinzipiell kann auch bei fehlender oder abgeschalteter Rückkopplung der enthaltenen Regelkreis der verbliebene Teil des Regelsystems für eine Systemidentifikation und Systembeschreibung eingesetzt werden, d.h. zur Informationsgewinnung.

Im folgenden ist die Erfindung anhand eines in der Zeichnung dargestellten Ausführungsbeispiels näher erläutert. Es zeigen
- Fig. 1: eine schematische Darstellung des hierarchischen Aufbaus des Regelsystems,
- Fig. 2: eine schematische Darstellung des Regelsystems während des Trainings der Simulatoren,
- Fig. 3: eine schematische Darstellung des Regelsystems während der Entwicklung der Menge von Reglern,
- Fig. 4: eine schematische Darstellung der Aufteilung der Teilbereiche der Regelung,
- Fig. 5A: eine schematische Darstellung der Mutual-Information basierten Problemzerlegung bei der Berechnung der gegenseitige Informationsgehalte (mutual information),
- Fig. 5B: eine schematische Darstellung der Mutual-Information basierten Problemzerlegung bei der Problemdekomposition,
- Fig. 6: eine schematische Darstellung der Dynamik-orientierte Problemzerlegung,
- Fig. 7: eine schematische Darstellung der Co-Evolutionäre bottom-up-Struktursuche,
- Fig. 8: eine schematische Darstellung der Problemdekomposition durch Netzwerkpruning,
- Fig. 9: eine schematische Darstellung des unvollständigen Datenraums, und
- Fig. 10: eine schematische Darstellung des Datenraums mit künstlichen Datenpunkten.

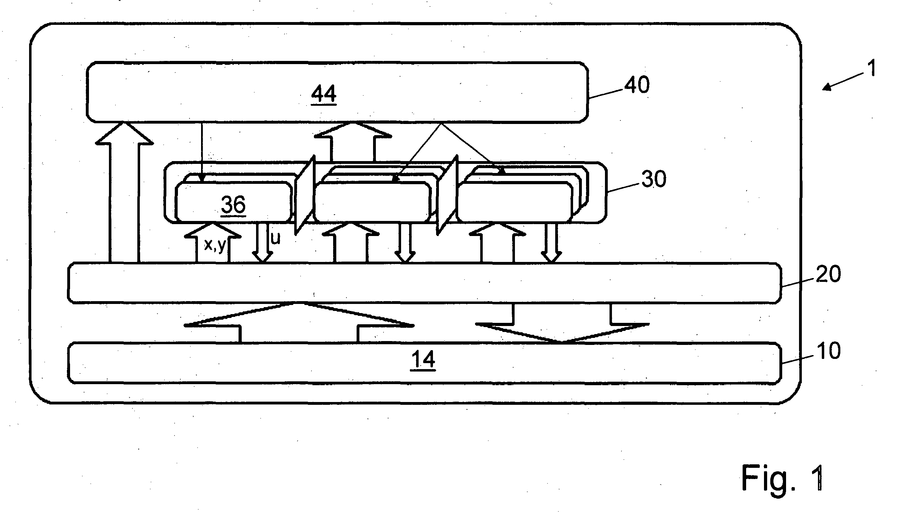

Ein lernfähiges, selbstorganisierendes, hierarchisches Regelsystem 1 zur Führung und Optimierung komplexer Prozesse ist in vier verschiedene Ebenen aufgeteilt (Fig. 1), um die komplexen Zusammenhänge von Ursache und Wirkung auf den verschiedenen Zeitskalen wenigstens näherungsweise zu beherrschen.

Die erste Ebene 10 repräsentiert den zu regelnden, komplexen, realen Prozess und wird durch eine Regelstrecke 14 verwirklicht. Die Regelstrecke 14 umfasst vorzugsweise einen Ofen (oder ein Rost) eines Kohle-, Öl- oder Gaskraftwerks, einer Müllverbrennungsanlage oder eines Zementwerks, dessen zu regelnder Verbrennungsprozess als komplexer Prozess geführt und optimiert werden soll. Die Regelstrecke 14 umfasst auch die zugehörigen Stellvorrichtungen, insbesondere für die Zufuhr von Brennstoff oder anderem umzusetzenden Material, beispielsweise Kohle, Öl, Gas, Müll, Kalk oder dergleichen, sowie von Primärluft (bzw. -sauerstoff) und Sekundärluft (bzw. -sauerstoff). Die Regelstrecke 14 umfasst ferner verschiedene Messvorrichtungen, beispielsweise für Emissionsparameter und die Zufuhrraten der Stellvorrichtungen. Wenigstens eine zusätzliche Beobachtungsvorrichtung erfasst laufend bildlich den Verbrennungsprozess in der Regelstrecke 14, insbesondere den Flammenkörper. Die Beobachtungsvorrichtung umfasst neben einem die Wand des Ofens durchdringenden optischen Zugang, wie beispielsweise einer Lanze oder einer in der EP 1 621 813 A1 offenbarten Vorrichtung, noch eine Kamera oder dergleichen, welche im optischen Bereich oder benachbarten Bereichen elektromagnetischer Wellen arbeitet. Bevorzugt wird eine zeitlich, örtlich und spektral hochauflösende Kamera, wie sie beispielsweise in der WO 02/070953 A1 beschrieben ist.

Die zweite Ebene 20 repräsentiert ein Interface zum Prozess und wird durch ein Prozessleitsystem realisiert. Sie steuert die Stellvorrichtungen mittels der (vektoriellen) Stellgröße u an und fragt die Informationen der verschiedenen Messvorrichtungen und der wenigstens einen zusätzlichen Beobachtungsvorrichtung ab. Die Messungen der verschiedenen Messvorrichtungen liefern den (vektoriellen) Istwert y, welcher (zeitabhängig) den aktuellen Zustand der Regelstrecke 14 beschreibt (d.h. die Zustandsvariablen). Die Daten der zusätzlichen Beobachtungsvorrichtung, also die Bilder des Flammenkörpers und der eventuellen Emissionen der Wände des Ofens werden in einem Merkmalsextraktor 28 mittels Bildverarbeitung ausgewertet, beispielsweise nach einem Eigenwert-Verfahren, das in der WO 2004/018940 A1 beschrieben ist, und/oder mittels eines Informationsmaßes, wie in der EP 1 967 792 A1 beschrieben ist. Der Merkmalsextraktor 28 liefert dann die daraus ermittelten Merkmale x (vektoriell zusammengefasst). Die durch das Prozessleitsystem realisierte zweite Ebene 20 stellt den Istwert y und die Merkmale x der dritten Ebene 30 bereit und empfängt die Stellgröße u.

Die dritte Ebene 30 repräsentiert die Führung bzw. Regelung verschiedener Zielgrößen des Prozesses. Aufgrund der Komplexität des Prozesses ist jedoch eine monolithische MIMO-Regelung technisch und praktisch nicht möglich. Aus diesem Grunde wird die dritte Ebene vorzugsweise - im Unterschied zu einem monolithischen Regler - in mehrere kleinere besser realisierbare Funktionseinheiten aufgeteilt, die Teilbereichen der Regelung definieren und jeweils durch ein separates System von Reglern {36, C₃₆, Cᵢ} realisiert werden, bestehend aus einem aktiven Regler 36 und gegebenenfalls weiteren, inaktiven Reglern in einem Depot. Vorzugsweise sind die Regler als rekurrente neuronale Netzwerke implementiert, da der Istwert y, die Merkmale x und die Stellgröße u hinsichtlich Ursache und Wirkung komplex miteinander verknüpft sind. Jeder aktive Regler 36 vergleicht - für seinen Bereich - den Istwert y mit einem (vektoriellen) Sollwert w, welcher den gewünschten Zustand der Regelstrecke 4 beschreibt. Aus der Regelabweichung e, also der (vektoriellen) Differenz des Istwertes y vom Sollwert w, und vorzugsweise weiteren Informationen ermittelt der aktive Regler 36 die (vektorielle) Stellgröße u. Der aktive Regler 36 kann außer auf diese Sollwerte w alternativ auf einen stabilen Prozess (d.h. einen ruhigen, quasistationären Betrieb der Regelstrecke 14) hin regeln oder auf eine Kombination. Die mit der Stellgröße u vorzunehmenden Stelleingriffe sowie etwaige Störungen können gemeinsam als Aktionen (gewollte und ungewollte Aktionen) behandelt werden, mit welcher die zweite Ebene 20 auf die Regelstrecke 14 einwirkt Die aktiven Regler 36 arbeiten adaptiv, d.h., sie nutzen jeweils aktuelle Daten x, y, um ihre Strategie den aktuellen Prozessgegebenheiten anzupassen. Mit der Umsetzung dieser dritten Ebene 30 ist es möglich, den Prozess entsprechend der Ziel vorgaben zu führen, wobei die Adaptivität dafür sorgt, dass sich die aktiven Regler 36 den aktuellen Randbedingungen des Prozesses durch ein Nachtraining anpassen können. Ein Regelkreis wird durch den aktiven Regler 36 in der dritten Ebene 30, das Prozessleitsystem in der zweiten Ebene 20 und die Regelstrecke 14 in der ersten Ebene 10 definiert.

Die vierte Ebene 40, welche vorliegend durch einen Hauptregler 44 realisiert wird, repräsentiert eine übergeordnete Aufsicht, welche durch Beobachtung der darunter liegenden Ebenen 20 und 30 verschiedene Aktionen auslöst. Dabei arbeiten die Ebenen 10, 20, 30, also die eigentliche Regelung, auch ohne einen Eingriff der vierten Ebene 40, aber nicht optimal. Beispielsweise werden von der vierten Ebene 40 die Güte ("Fitness") der aktiven Regler 36 und auch die Prozesseigenschaften dauerhaft beobachtet. Bei entsprechend großen Abweichungen oder Veränderungen werden Kopien der aktiven Regler 36 erzeugt und in dem Depot der inaktiven Regler verwahrt. Die im Depot verbleibenden Kopien werden nicht weiter adaptiert und stehen zur späteren erneuten Anwendung zur Verfügung. Die aktiven Regler 36 werden jedoch im Zuge der Adaptivität permanent weiter den aktuellen Prozessgegebenheiten angepasst. Auf diese Weise füllt sich das Depot mit verschiedenen inaktiven Reglern, die jeweils für unterschiedliche Prozesssituationen geeignet sind. Die vierte Ebene 40 prüft nun durch Analyse der aktuellen Prozesseigenschaften oder durch Offlinetests in einem geeigneten Takt, ob nicht im Depot ein Regler bereit liegt, der für den aktuellen Prozesszustand besser geeignet wäre als der aktuell arbeitende, aktive Regler 36. Ist dies der Fall, wird dieser bislang inaktive Regler aktiviert und genutzt und der bislang aktive Regler 36 wird inaktiv und im Depot eingelagert. Auf diese Weise kann sich das Regelsystem 1 ein Gedächtnis verschiedener Zustände (der Regelstrecke 14) mit den zugehörigen Reglerstrategien anlegen und jederzeit abrufen. Somit ist man nicht auf die begrenzte Geschwindigkeit der Adaptivität angewiesen und kann deutlich schneller auf Wechsel im Prozess reagieren.

Neben der Prüfung der Eignung von Reglern ist es eine weitere Aufgabe der vierten Ebene 40, durch Prozessbeobachtung geeignete Parameter für die Regler der dritten Ebene 30 zu finden und zu aktivieren. Das dazu erforderliche Prozesswissen wird einerseits in Form von bekanntem Expertenwissen ursprünglich eingebracht und andererseits durch eigene aktive Prozesserfahrungen ergänzt. Mit zunehmender Dauer des Prozesses wächst die Prozesserfahrung an und dominiert schließlich das Prozesswissen. Mit Hilfe des Prozesswissens kann die vierte Ebene 40 nun zum Beispiel geeignete Sollwerte .oder Arbeitsbereiche der Regler in der dritten Ebene 30 definieren und den Prozess so führen, wie es nach dem vorliegenden Prozesswissen am besten funktioniert. Letztendlich definieren der Hauptregler 44 in der vierten Ebene 40, die aktiven Regler 36 in der dritten Ebene 30, das Prozessleitsystem in der zweiten Ebene 20 und die Regelstrecke 14 in der ersten Ebene 10 einen komplexen Regelkreis, d.h. mehrere miteinander gekoppelte Regelkreise.

Im folgenden sind nun Teilaspekte des Regelsystems 1 genauer beschrieben.

Ein Teilaspekt ist die Prüfung von Reglern, welche nun anhand eines Teilbereichs mit einem Regler 36 erläutert werden soll. Der Hauptregler 44 verwaltet nicht nur das Depot mit den Reglern, sondern auch mehrere Simulatoren S₁, S₂, .... Sₙ, die jeweils ein (Prozess-)Modell der Regelstrecke 14 darstellen und diese simulieren. Die Simulatoren S₁, S₂, .... Sₙ beruhen auf - insbesondere in Hinblick auf unterschiedliche Situationen - unterschiedlich konfigurierten Modellen für den (Verbrennungs-) Prozess der Regelstrecke 14. Die Simulatoren S₁, S₂, .... Sₙ sind vorzugsweise als rekurrente neuronale Netzwerke implementiert. Es ist jederzeit möglich, weitere Simulatoren Sᵢ hinzuzufügen oder zu entfernen. Ganz am Anfang, wenn noch keine Prozesserfahrungen vorhanden sind, verwaltet der Hauptregler 44 nur wenige Simulatoren S₁, S₂, .... Sₙ, beispielsweise einen einzigen Simulator S₁, welche allein auf dem Expertenwissen als einzigem Prozesswissen beruhen. Mit zunehmender Prozesserfahrung erstellt der Hauptregler 44 dann vorzugsweise weitere Simulatoren S₁, S₂, .... Sₙ.

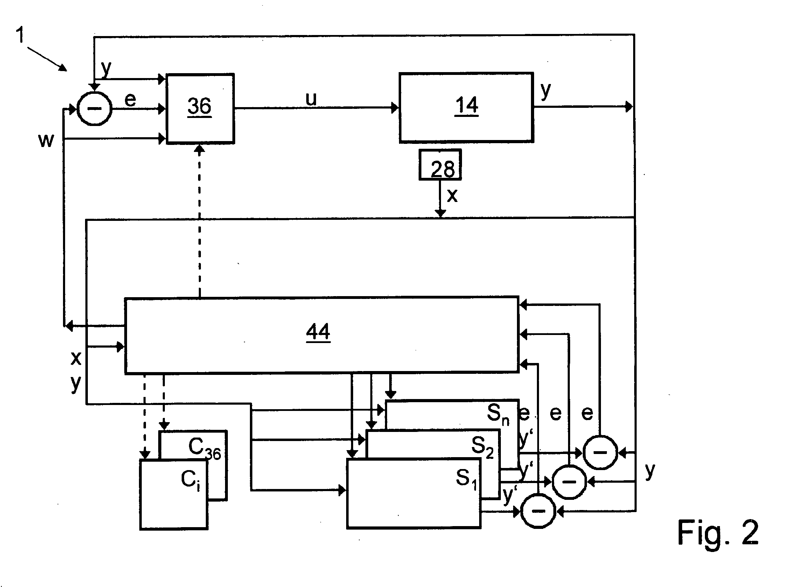

Der Hauptregler 44 trainiert zunächst (Fig. 2) die einzelnen Simulatoren S₁, S₂, .... Sₙ evolutionär, indem die Abweichung der Prognose y' für den Istwert y vom realen Istwert y eine "Fitness" definiert, die jeweils zu optimieren ist. Die Simulatoren S₁, S₂,.... Sₙ erhalten dabei außer dem realen Istwert y auch die weiteren Merkmale x. Bei diesem evolutionären Ansatz werden Simulatoren S₁, S₂, .... Sₙ, die nur eine geringe Fitness erreichen, vom Hauptregler 44 wieder verworfen. Sind alle Simulatoren S₁, S₂, .... Sₙ ausreichend trainiert, können sie das Verhalten der Regelstrecke 14 für unterschiedliche Verläufe der Stellgrößen u approximieren. Aufgrund der unterschiedlichen Konfiguration ist davon auszugehen, dass nicht alle Simulatoren S₁, S₂, .... Sₙ die gleichen Fehler machen, sondern dass die Gesamtheit der Simulatoren S₁, S₂, .... Sₙ ein besseres Modell der Regelstrecke 14 darstellt als jeder einzelne Simulator Sᵢ.

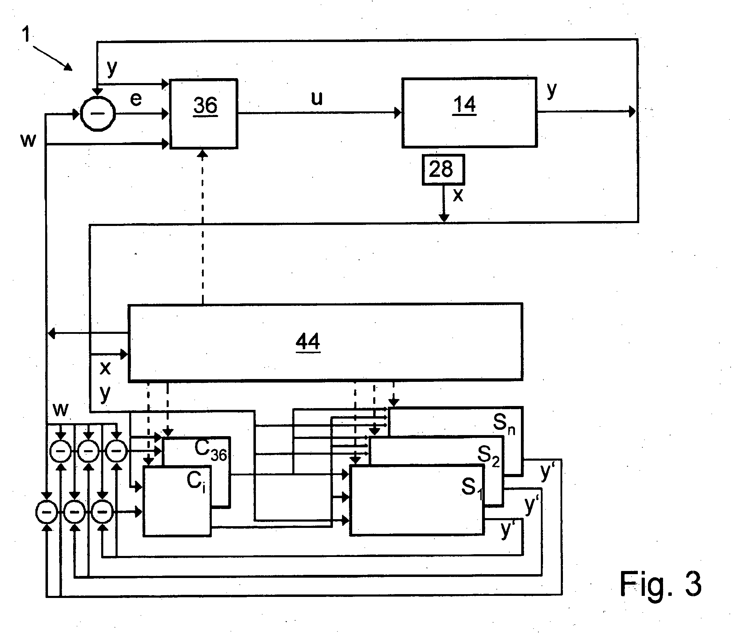

Der Hauptregler 44 entwickelt nun (Fig. 3) eine Menge von (inaktiven) Reglern {Cᵢ, C₃₆}, bestehend aus neuen Reglern Cᵢ, welche evolutionären Suchstrategien unterworfen werden (also vom Hauptregler 44 erstellte und bei zu geringer Fitness wieder von ihm verworfene Elemente dieser Menge), und aus allen Reglern C₃₆, die früher aktive Regler 36 waren und die von den evolutionären Suchstrategien für neue Regler Cᵢ ausgenommen sind. Ganz am Anfang, wenn noch keine Prozesserfahrungen vorhanden sind, oder wenn die Aufteilung der Regelung zwischen den aktiven Reglern 36, 36', 36", 36"', 36"" geändert worden ist, wird es noch keine solchen Regler C₃₆ geben, die früher aktive Regler 36 waren. Der Hauptregler 10 testet die Menge von Reglern {Cᵢ, C₃₆} an den Simulatoren S₁, S₂, .... Sₙ. Es wird derjenige Regler Cᵢ oder C₃₆ gesucht, der im Mittel über alle verwendeten Simulatoren S₁, S₂, .... Sₙ deren Prognosen y' im Zeitverlauf am besten mit den Verläufen der Sollwerte w in Übereinstimmung bringt (d.h derjenige Regler, mit dem die Sollwerte w am besten zu erreichen sind). Die "Fitness" eines solchen Reglers Cᵢ oder C₃₆ ergibt sich daher aus den (simulierten) Regelabweichungen e des Reglers Cᵢ oder C₃₆ in geschlossenen Regelkreisen an allen Simulatoren S₁, S₂, .... Sₙ. Auch hierbei werden die Merkmale x berücksichtigt. Der so aufgefundene Regler Cᵢ oder C₃₆ sei als bester Regler C₁ bezeichnet. Da die verschiedenen Simulatoren S₁, S₂, .... Sₙ. auf verschiedenen Prozessmodellen beruhen und der beste Regler C₁ im Mittel über alle verwendeten Simulatoren S₁, S₂, .... Sₙ aufgefunden wurde, enthält der beste Regler C₁ Eigenschaften verschiedener Prozessmodelle.

Der beste (inaktive) Regler C₁ wird nun vom Hauptregler 44 mit dem in der dritten Ebene 30 aktiven Regler 36 verglichen, beispielsweise hinsichtlich der mittleren Regelabweichung e. Je nach zeitlicher Entwicklung des Zustandes der Regelstrecke 14 (d.h. je nach Prozesssituation und Prozesshistorie) kann es sein, dass der beste Regler C₁ auch besser als der aktive Regler 36 ist. Der Hauptregler 44 ersetzt dann den aktiven Regler 36 durch den besten Regler Cᵢ. Der bisherige aktive Regler 36 kehrt in die Menge von inaktiven Reglern {Cᵢ, C₃₆} zurück. Sofern irgendwann wieder ein Zustand der Regelstrecke 14 erreicht wird, für den dieser früher aktive Reglern C₃₆ bereits gut war, wird er auch im Test an den Simulatoren S₁, S₂, .... Sₙ eine sehr hohe "Fitness" erhalten und wieder zum aktiven Regler 36 werden.

Der Hauptregler 44 nimmt das Training (Fig. 2) der Simulatoren S₁, S₂, .... Sₙ und das Testen (Fig. 3) der Menge von Reglern {Cᵢ, C₃₆} in bestimmten Zyklen mit dem jeweils aktuellen Istwert y (und den aktuellen Merkmalen x) vor, beispielsweise alle acht Stunden, um einen an die mittelfristigen zeitlichen Änderungen des Zustandes der Regelstrecke 14 angepassten aktiven Regler 36 zu erhalten. Demgegenüber haben Regelsysteme mit nur einem (aktiven) Regler den Nachteil, dass bei einer größeren Änderung des Prozesses das Nachtraining des Reglers zu zeitintensiv wird.

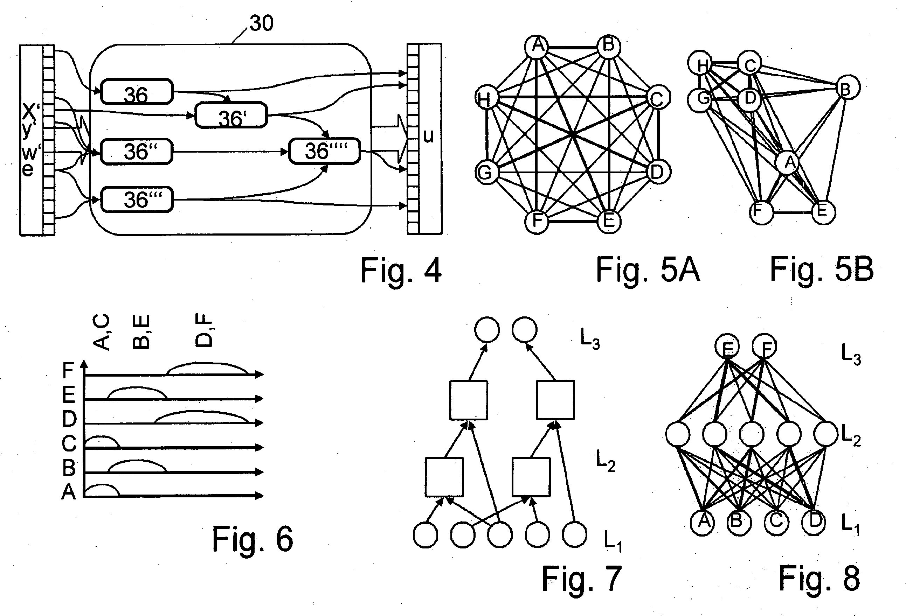

Ein weiterer Teilaspekt ist die Definition der Teilbereiche der Regelung und Aufteilung unter den aktiven Reglern 36, 36', 36", 36"', 36"". Die Teilbereiche der Regelung sind kleineren und einfacher regelbaren und modellierbaren Teilprozessen des komplexen Prozesses zugeordnet (Fig. 4). Die Aufteilung ist vorzugsweise nicht statisch, sondern ändert sich dynamisch mittels einer automatischen Problemdekomposition (APD). Hierzu analysiert das lernfähige, selbstorganisierende System zur automatischen Problemdekomposition (auf dem Hauptregler 44) die Problemstruktur des komplexen hochdimensionalen Prozesses automatisch und entwirft eine geeignete Struktur von Reglern 36, 36', 36", 36"', 36"". Im Gegensatz zum monolithischen Regler zeichnet sich dieses Konzept durch eine höhere Transparenz und Leistungsfähigkeit aus und ist schneller erlern- und adaptierbar. Diese Strukturierung des Prozesses erfolgt anhand der vorliegenden möglichst umfangreichen und informativen Prozessdaten aus einer Datenbank parallel mittels wenigstens eines, vorzugsweise aller fünf nachfolgend beschriebener Verfahren.

Bei der Mutual-Information basierten Problemzerlegung (Fig. 5A, Fig. 5B)wird ähnlich wie beim oben genannten Merkmalsextraktor 28 und in der EP 1 967 792 A1 beschrieben vorgegangen. Zunächst werden zwischen allen im Datensatz verfügbaren Kanälen (x, y, u ....) paarweise der gegenseitige Informationsgehalte (mutual information) berechnet. Die dabei entstehenden Werte dienen als Kantengewichte in einem voll verschalteten Graphen, bei dem jedem Kanal ein Knoten A, B, C, D, E, F, G, H zugeordnet wird (Fig. 5A). In einem anschließenden Relaxationsprozess üben diese Kantengewichte je nach Stärke Anziehungs- bzw. Abstoßungskräfte zwischen den Knoten A, B, C, D, E, F, G, H aus, so dass sich diese in einem entsprechend hochdimensionalen Raum frei verschieben können. Das Ergebnis dieses Relaxationsprozesses wird nun als Problemdekomposition interpretiert, wobei die aus voneinander abhängigen Knoten gebildeten Cluster A,E,F sowie C,D,G,H und B jeweils einem Teilproblem entsprechen (Fig. 5B).

Bei der Dynamik-orientierten Problemzerlegung (Fig. 6) wird der Umstand genutzt, dass in strukturierten komplexen realen Prozessen nicht alle Teilprozesse auf der gleichen Zeitskala ablaufen. Dazu werden zunächst alle Signale (der Kanäle A, B, C, D, E, F) aus dem Zeitraum in den Frequenzraum transformiert und anschließend anhand ihrer Spektren in verschiedene Teilprobleme eingeteilt, so dass Kanäle mit ähnlicher Dynamik jeweils zu einem Teilsystem A,C sowie B,E und D,F gruppiert werden.

Bei der Co-Evolutionären bottom-up-Struktursuche (Fig. 7) wird, im Gegensatz zu den vorherigen Verfahren, durch Kombination zahlreicher kleiner Funktionseinheiten das komplexe Gesamtsystem modelliert. Dazu werden Co-evolutionäre Algorithmen eingesetzt, die anhand des Abbildungsfehlers vordefinierter Zielkanäle eine geeignete Kombination der Teilsysteme erzeugen. Die somit gefundene Modellstruktur entspricht der Problemdekomposition. In Fig. 7 ist beispielhaft von unten nach oben die Eingabeschicht L₁, zwei verdeckten Schichten L₂ mit einfachen lernfähigen Approximatoren und die Ausgabeschicht L₃ dargestellt. Die verdeckten Schichten L₂ können in anderer Anzahl vorhanden sein.

Bei der Problemdekomposition durch Rewarddekomposition werden werden zunächst hypothetische Problemzerlegungen konstruiert. Anschließend wird ein Verfahren zur automatischen Rewarddekomposition zur Lösung des Credit Assignment Problemes genutzt, um die Güte der hypothetischen Problemzerlegung zu bewerten. Diese Bewertung wird anschließend von einem stochastischen Suchverfahren genutzt, um die optimale Problemzerlegungen zu finden.

Schließlich modelliert die Problemdekomposition durch Netzwerkpruning (Fig. 8) zunächst den komplexen Prozess mittels geeigneter adaptiver Funktionsapproximatoren, wie z.B. Neuronaler Netzwerke, ähnlich wie in der EP 2 080 953 A1 beschrieben. Durch Analyse der internen Modellstruktur (Stärke der Gewichtung symbolisiert durch Strichstärke) kann anschließend auf die zu Grunde liegende Problemstruktur des Prozesses geschlossen werden. In Fig. 8 ist von unten nach oben die Eingabeschicht L₁, die verdeckte Schicht L₂ und die Ausgabeschicht L₃ dargestellt.

Jedes dieser Verfahren liefert eine Hypothese für die Problemzerlegung. In einem anschließenden Schritt werden diese Dekompositionsvorschläge miteinander verglichen und eine gemeinsame Lösung abgeleitet, welche die Aufteilung in Teilbereiche vornimmt und den Reglern 36, 36', 36", 36"', 36"" zuordnet. Hierzu können verschiedene Ansätze genutzt werden, wie beispielsweise eine automatisierte Mehrheitsentscheidung. Wenn der Prozess schon länger läuft, also Prozesserfahrung vorliegt, erfolgt die automatische Problemdekomposition sinnvollerweise auf einer größeren Zeitskala als die oben beschriebene Prüfung der Regler durch den Hauptregler 44.

Ein Teilaspekt ist auch die Problematik, dass das Prozesswissen, welches anfänglich nur aus Expertenwissen besteht, nur langsam durch Prozesserfahrung angereichert wird und diese nicht gleichmäßig über die möglichen Zustände (der Regelstrecke 14), d.h. im Datenraum des Prozesses, verteilt ist. So liegen nur für den normalen Arbeitsbereich entsprechend informative Daten - in ungleichmäßiger Verteilung - vor, jedoch keine oder viel zu wenige Daten zu den abnormalen Störungsbereichen. In Folge dessen kann ein Regler keine adäquate Strategie erlernen und wird sich im Onlinebetrieb unvorhersehbar verhalten. Daher wird ein adaptiver Regler (NFQ) vorgeschlagen, welcher auf Grundlage der im Datenraum vorhandenen, gemessenen Prozessdaten trainiert wird, und bei welchem künstliche Datenpunkte in den Datenraum eingeführt werden, um zu verhindern, dass der Regler beliebige Strategien für Regionen mit schlechter Datenstützung entwickelt. Vorhandenes Expertenwissen kann explizit integriert werden. Der adaptive Regler ist auch zum Training auf closed-loop-Datensätzen geeignet.

Der adaptive Regler wird durch ein lernfähiges neuronales mehrschichtiges Netzwerk realisiert, welches durch ein gradientenabstiegsbasiertes oder evolutionäres Verfahren trainiert wird. Es sind dabei mehrere Eingabevariablen und mehrere Stellgrößen (MIMO-System), einfache SISO-Systeme und auch Mischformen (MISO, SIMO) möglich. Der adaptive Regler basiert auf dem Reinforcement-Learning und bildet nicht direkt die Regelstrategie ab, sondern ermittelt zunächst den Wert (Value) von Stelleingriffen in verschiedenen Prozesssituationen. Der Wert eines Stelleingriffes wird anhand einer vom Betreiber definierten Rewardfunktion ermittelt. Diese Rewardfunktion ist die mathematische Notation des Regelzieles, z.B. minimale Regelabweichung einer Zielgröße e = - abs(w-y). Durch Vergleich der Werte unterschiedlicher Stelleingriffe in der gleichen Prozesssituation kann der Regler herausfinden, welche Strategie (Policy) besser ist, und kann diese dann auch praktisch anwenden.

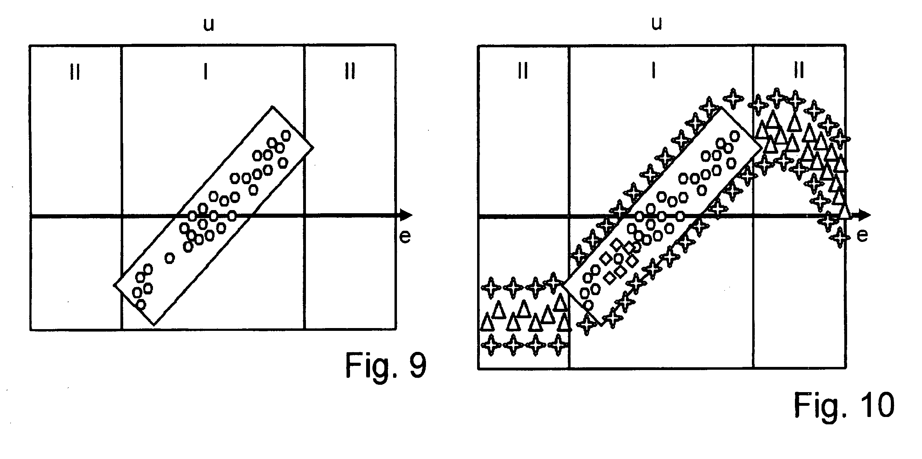

Das Training des Reglers basiert zunächst nur auf den im Datenraum vorhandenen Messungen verschiedener Prozessgrößen. Typischerweise ist der Datenraum nicht vollständig in dem Sinne, dass einerseits alle denkbaren Prozesssituationen enthalten sind (seltene Störungen oder Ausnahmesituationen fehlen meist). Andererseits werden normalerweise auch nicht in allen Prozesssituationen alle möglichen Stelleingriffe enthalten sein, da diese industriellen Prozesse meist geregelt sind. Die Zeichnung (Fig. 9) veranschaulicht die zwei Kategorien fehlender Daten für einen einfachen SISO-Fall mit einer Stellgröße u und einer Eingangsgröße e. Wie hierbei zu erkennen ist, sind die vorhandenen Messdaten (Kreise in Fig. 9 und Fig. 10) im Datenraum-Gebiet I mit bekannten Prozesssituationen (d.h. vorhandenem Prozess-wissen) nicht gleich gut verteilt. Dies kann beim Training zu Problemen führen, da unterrepräsentierte Regionen des Datenraums auch beim Trainingsprozess weniger Berücksichtigung finden. Um diesen Effekt zu minimieren, werden künstliche Datenpunkte in diese schwach besetzten Regionen des Datenraums eingefügt (Vierecke in Fig. 9). Somit findet ein Histogrammausgleich der Trainingsdaten in allen bekannten Regionen des Datenraumes statt.

Um sicherzustellen, dass in den unbekannten Regionen keine unerwünschten Extrapolationen des Reglerverhaltens auftreten, werden nun auch dort künstliche Daten eingefügt. Dies erfolgt einerseits in der Region nicht getesteter Stellaktionen im Datenraum-Gebiet I mit bekannten Prozesssituationen (Kreuze in Datenraum-Gebiet I in Fig. 10). Diese Datenpunkte erhalten einen geringen Wert als die real erlebten Datenpunkte und verhindern somit das Wegdriften der Handlungsstrategie in Bereiche ohne reale Prozesserfahrung, d.h. sie grenzen die Region ab. In den Datenraum-Gebieten II mit gänzlich unbekannten Prozesssituationen werden ebenfalls künstliche Datenpunkte eingefügt (Dreiecke und Kreuze in Datenraum-Gebiet II in Fig. 10). Die Dreiecke in Fig. 10 repräsentieren hierbei das vorhandene Expertenwissen und die Kreuze mit geringerem Wert verhindern ungewollte Extrapolationen, d.h. sie grenzen diese Regionen ebenfalls ab.

Auf diese Weise kann sichergestellt werden, dass der adaptive Regler in Regionen, die durch reale Erfahrungen gestützt werden, diese auch genutzt werden. In bislang nicht explorierten Regionen stützt sich der Regler auf das aufgeprägte Expertenwissen. Ergeben sich während des laufenden Betriebes mit dem Regler reale Prozesserfahrungen, werden diese ganz normal in das Training einbezogen und dominieren zunehmend das Expertenwissen. Somit wird sichergestellt, dass reale Prozesserfahrungen sich mit der Zeit auch gegenüber dem Expertenwissen durchsetzen.

### Bezugszeichenliste

- 1: Regelsystem
- 10: erste Ebene
- 14: Regelstrecke
- 20: zweite Ebene
- 28: Merkmalsextraktor
- 30: dritte Ebene
- 36, 36', 36", 36"', 36"": aktiver Regler
- 40: vierte Ebene
- 44: Hauptregler
- A, B, C, D, E, F, G, H: Kanal, Knoten
- Cᵢ, C₃₆, C₁: Regler
- e: Regelabweichung
- I, II: Datenraum-Gebiet
- L₁: Eingabeschicht
- D₂: verdeckte Schicht
- L₃: Ausgabeschicht
- Sᵢ: Simulator
- u: Stellgröße
- w: Sollwert
- x: Merkmal
- y: Istwert
- y': Prognose des Istwertes
- { }: Menge

## Patentansprüche

1. Regelsystem für einen zu regelnden, komplexen realen Prozess, insbesondere zur Regelung eines Verbrennungsprozesses in einem Kraftwerk, einer Müllverbrennungsanlage oder einem Zementwerk, welches hierarchisch in verschiedene Ebenen (10, 20, 30, 40) aufgeteilt ist, wobei eine erste Ebene (10) den zu regelnden, komplexen, realen Prozess repräsentiert und durch eine Regelstrecke (14) verwirklicht wird, eine zweite Ebene (20) ein Interface zum Prozess repräsentiert und durch ein Prozessleitsystem realisiert wird, eine dritte Ebene (30) die Regelung des Prozesses repräsentiert und durch wenigstens einen aktiven Regler (36) realisiert wird, und eine vierte Ebene (40) eine übergeordnete Aufsicht repräsentiert und durch einen Hauptregler (44) realisiert wird, **dadurch gekennzeichnet, dass** der Hauptregler (44) dazu eingerichtet ist, die Regelstrecke (14) simulierende Stimulatoren (S₁, S₂, .... Sₙ) zu trainieren eine Menge von Reglern ({Cᵢ, C₃₆}) zu entwickeln und an den Simulatoren (S₁, S₂, .... Sₙ) zu testen, um den besten Regler (C₁) aufzufinden und mit dem aktiven Regler (36) zu vergleichen und diesen gegebenenfalls zu ersetzen, wobei die Menge von Reglern ({Cᵢ, C₃₆}) neue Regler (Cᵢ) und auch Regler (C₃₆) enthält, die früher aktive Regler (36) waren wobei der aktive Regler (36) die Regelabweichung (e) zwischen Istwert (y) der Regelstrecke (14) und Sollwert (w) zur Ermittlung der Stellgröße (u) verwendet.

2. Regelsystem nach Anspruch 1, **dadurch gekennzeichnet, dass** der aktive Regler (36) auf einem rekurrenten neuronalen Netzwerk beruht.

3. Regelsystem nach einem der vorhergehenden Ansprüche, **dadurch gekennzeichnet, dass** ein Merkmalsextraktor (28) vorgesehen ist, der eine Bildverarbeitung der Regelstrecke (14) vornimmt und daraus Merkmale (x) ermittelt.

4. Regelsystem nach nach einem der vorhergehenden Ansprüche, **dadurch gekennzeichnet, dass** der Hauptregler (44) die einzelnen Simulatoren (S₁, S₂, .... Sₙ) evolutionär mittels eines rekurrenten neuronalen Netzwerkes trainiert, indem die Abweichung der Prognose (y') für einen Istwert (y) von einem realen Istwert (y) eine Fitness definiert, die jeweils zu optimieren ist.

5. Regelsystem nach einem der vorhergehenden Ansprüche, **dadurch gekennzeichnet, dass** der Hauptregler (44) die Menge von Reglern ({Cᵢ, C₃₆}) an den Simulatoren (S₁, S₂, .... Sₙ) testet, wobei derjenige Regler (Cᵢ, C₃₆) gesucht wird, der im Mittel über alle verwendeten Simulatoren (S₁, S₂, .... Sₙ) deren Prognosen (y') im Zeitverlauf am besten mit den Verläufen der Sollwerte (w) in Übereinstimmung bringt.

6. Regelsystem nach Anspruch 5, **dadurch gekennzeichnet, dass** eine Fitness eines Regler (Cᵢ, C₃₆) aus der Menge von Reglern ({Cᵢ, C₃₆}) sich aus den simulierten Regelabweichungen (e) des Reglers (Cᵢ, C₃₆) in geschlossenen Regelkreisen an allen Simulatoren (S₁, S₂, .... Sₙ) ergibt.

7. Regelsystem nach einem der vorhergehenden Ansprüche, **dadurch gekennzeichnet, dass** die neuen Regler (Cᵢ) evolutionären Suchstrategien unterworfen sind, während die Regler (C₃₆), die früher aktive Regler (36) waren, von den evolutionären Suchstrategien für neue Regler (Cᵢ) in der Menge von Reglern ({Cᵢ, C₃₆}) ausgenommen sind.

8. Regelsystem nach einem der vorhergehenden Ansprüche, **dadurch gekennzeichnet, dass** der Hauptregler (44) in bestimmten Zyklen die Simulatoren (S₁, S₂, .... Sₙ) trainiert und daran die Menge von Reglern ({Cᵢ, C₃₆}) testet.

9. Regelsystem nach einem der vorhergehenden Ansprüche, **dadurch gekennzeichnet, dass** die Regelung in der dritten Ebene (30) unter mehreren aktiven Reglern (36, 36', 36", 36"', 36"") in Teilbereiche aufgeteilt ist, welchen Teilprozesse des komplexen Prozesses zugeordnet sind.

10. Regelsystem nach Anspruch 9, **dadurch gekennzeichnet, dass** die Aufteilung der Regelung unter den mehreren aktiven Reglern (36, 36', 36", 36"', 36"") sich dynamisch ändert mittels einer automatischen Problemdekomposition.

11. Regelsystem nach einem der vorhergehenden Ansprüche, **dadurch gekennzeichnet, dass** in einem Datenraum (I; II) von Zuständen der Regelstrecke (14) in nicht oder schwach besetzten Regionen künstliche Datenpunkte eingefügt sind.

12. Regelsystem nach Anspruch 11, **dadurch gekennzeichnet, dass** auch in Regionen nicht getesteter Stellaktionen im Datenraum-Gebiet (I) mit bekannten Prozesssituationen und/oder in Datenraum-Gebieten (II) mit gänzlich unbekannten Prozesssituationen künstliche Datenpunkte eingefügt sind.

## Claims

1. A control system for a complex, real process to be controlled, particularly for controlling a combustion process in a power plant, a waste incineration installation or a cement works, being hierarchically split into various levels (10, 20, 30, 40), wherein a first level (10) represents the complex, real process to be controlled and is implemented by the controlled system (14), a second level (20) represents an interface to the process and is realized by a process control system, a third level (30) represents the control of the process and is realized by the at least one active controller (36), and a fourth level (40) represents a superordinate supervisor and is realized by a principal controller (44), **characterized in that** the principal controller (44) is adapted to train simulators (S₁, S₂, ..., Sₙ) simulating the controlled system (14), to develop a set of controllers ({Cᵢ, C₃₆}), and to test said set of controllers on the simulators (S₁, S₂, ..., Sₙ) in order to find the best controller (C₁) and compare it with the active controller (36) and to replace it if necessary, wherein the set of controllers ({Cᵢ, C₃₆}) new controllers (Cᵢ) and also controllers (C₃₆) which were active controllers (36) earlier, wherein the active controller (36) uses the control error (e) between the actual value (y) of the controlled system (14) and the setpoint value (w) in order to ascertain the manipulated variable (u).

2. The control system as claimed in claim 1, **characterized in that** the active controller (36) is based on a recurrent neural network.

3. The control system as claimed in one of the preceding claims, **characterized in that** a feature extractor (28) is provided which performs image processing for the controlled system (14) and ascertains features (x) therefrom.

4. The control system as claimed in one of the preceding claims, **characterized in that** the principal controller (44) trains the individual simulators (S₁, S₂, ..., Sₙ) in evolutionary fashion using a recurrent neural network by virtue of the discrepancy in the forecast (y') for the actual value (y) from a real actual value (y) defining a fitness which needs to be optimized in each case.

5. The control system as claimed in one of the preceding claims, **characterized in that** the principal controller (44) tests the set of controllers ({Cᵢ, C₃₆}) on the simulators (S₁, S₂, ..., Sₙ), wherein a search is performed for that controller (Cᵢ, C₃₆) which, on average over all the simulators (S₁, S₂, ..., Sₙ) used, best matches the forecasts (y') of the latter in the time profile to the profiles of the setpoint values (w).

6. The control system as claimed in claim 5, **characterized in that** the fitness of a controller (Cᵢ, C₃₆) from the set of controllers ({Cᵢ, C₃₆}) is obtained from the simulated control errors (e) of the controller (Cᵢ, C₃₆) in closed control loops on all the simulators (S₁, S₂, ..., Sₙ).

7. The control system as claimed in one of claims 5 to 9, **characterized in that** the new controllers (Cᵢ) are subjected to evolutionary search strategies, while the controllers (C₃₆) which were active controllers (36) earlier are excluded from the evolutionary search strategies for new controllers (Ci) in the set of controllers ({Cᵢ, C₃₆}).

8. The control system as claimed in one of the preceding claims, **characterized in that** the principal controller (44) trains the simulators (S₁, S₂, ..., Sₙ) in particular cycles and tests the set of controllers ({Cᵢ, C₃₆}) thereon.

9. The control system as claimed in one of the preceding claims, **characterized in that** the control in the third level (30) is split among a plurality of active controllers (36, 36', 36", 36"', 36"") into subareas which have associated subprocesses in the complex process.

10. The control system as claimed in claim 9, **characterized in that** the split of the control among the plurality of active controllers (36, 36', 36", 36"', 36"") changes dynamically by means of automatic problem decomposition.

11. The control system as claimed in one of the preceding claims, **characterized in that** artificial data points are inserted in a data space (I; II) for the states of the controlled system (14) in unoccupied or sparsely occupied regions.

12. The control system as claimed in claim 11, **characterized in that** artificial data points are also inserted in regions of untested control actions in the data space area (I) with known process situations and/or in data space areas (II) with totally unknown process situations.

## Revendications

1. Circuit de commande pour un procès réel complexe à régler, en particulier pour le réglage d'un procès de combustion dans une centrale électrique, un incinérateur ou une cimenterie, lequel est subdivisé de façon hiérarchisée en niveaux divers (10, 20, 30, 40), où un premier niveau (10) représente le procès réel complexe à régler et est réalisé par un système réglé (14), un second niveau (20) représente une interface pour le procès et est réalisé par un système de contrôle de procès, un troisième niveau (30) représente le réglage du procès et est réalisé par au moins un régulateur actif (36), et un quatrième niveau (40) représente une vue d'en haut superposée et est réalisé par un régulateur principal (44), **caractérisé en ce que** le régulateur principal (44) est arrangé pour entraîner des simulateurs simulant le système réglé (14) (S₁, S₂, .... Sₙ), développer une quantité de régulateurs ({Cᵢ, C₃₆ }) et les prouver aux simulateurs (S₁, S₂, .... Sₙ), pour trouver le régulateur meilleur (C₁) et le confronter avec le régulateur actif (36) et substituer ce dernier le cas échéant, où la quantité de régulateurs ({Cᵢ, C₃₆ }) contient de nouveaux régulateurs (Cᵢ) et aussi des régulateurs (C₃₆) qui étaient autrefois des régulateurs actifs (36), où le régulateur actif (36) emploie l'écart de réglage (e) entre valeur effective (y) du système réglé (14) et valeur prescrite (w) pour la détection de la grandeur de réglage (u).

2. Circuit de commande selon la revendication 1, **caractérisé en ce que** le régulateur actif (36) se base sur un réseau neuronal récurrent.

3. Circuit de commande selon une des revendications précédentes, **caractérisé en ce qu'**un extracteur de caractéristiques (28) est prévu, qui exécute un traitement d'image du système réglé (14) et en détermine des caractéristiques (x).

4. Circuit de commande selon une des revendications précédentes, **caractérisé en ce que** le régulateur principal (44) entraîne les simulateurs individuels (S₁, S₂, .... Sₙ) de façon évolutionnaire moyennant un réseau neuronal récurrent, où la déviation de la prévision (y') pour une valeur effective (y) d'une valeur effective réelle (y) définit une valeur adaptative, qui est à optimiser chaque fois.

5. Circuit de commande selon une des revendications précédentes, **caractérisé en ce que** le régulateur principal (44) teste la quantité de régulateurs ({Cᵢ, C₃₆ }) aux simulateurs (S₁, S₂, .... Sₙ), en cherchant le régulateur (Cᵢ, C₃₆) qui en moyenne sur tous les simulateurs employés (S₁, S₂, .... Sₙ) met leurs pronostics (y') au fil du temps le mieux en conformité avec les déroulements des valeurs nominales (w).

6. Circuit de commande selon la revendication 5, **caractérisé en ce qu'**une valeur adaptative d'un régulateur (Cᵢ, C₃₆) de la quantité de régulateurs ({Cᵢ, C₃₆ }) résulte des écarts de réglage simulés (e) du régulateur (Cᵢ, C₃₆) dans des boucles fermées sur tous les simulateurs (S₁, S₂, .... Sₙ).

7. Circuit de commande selon une des revendications précédentes, **caractérisé en ce que** le nouveaux régulateurs (Cᵢ) sont soumis à des stratégies de recherche évolutionnaires, alors que les régulateurs (C₃₆) qui étaient autrefois des régulateurs actifs (36) sont exceptés des stratégies de recherche évolutionnaires pour nouveaux régulateurs (Cᵢ) dans la quantité de régulateurs ({Cᵢ, C₃₆}).

8. Circuit de commande selon une des revendications précédentes, **caractérisé en ce que** le régulateur principal (44) dans des cycles déterminés entraîne les simulateurs (S₁, S₂, .... Sₙ) et y teste la quantité de régulateurs ({Cᵢ, C₃₆}).

9. Circuit de commande selon une des revendications précédentes, **caractérisé en ce que** le réglage dans le troisième niveau (30) est subdivisé en sections entre plusieurs régulateurs actifs (36, 36', 36", 36", 36"', 36""), auxquels sont associés des procès partiels du procès complexe.

10. Circuit de commande selon la revendication 9, **caractérisé en ce que** la subdivision du réglage entre les plusieurs régulateurs actifs (36, 36', 36", 36", 36"', 36"") change de façon dynamique moyennant une décomposition automatique du problème.

11. Circuit de commande selon une des revendications précédentes, **caractérisé en ce que** dans un espace de données (I; II) de conditions du système réglé (14), dans des régions non ou faiblement occupées des points de données artificiels sont insérés.

12. Circuit de commande selon la revendication 11, **caractérisé en ce que** aussi dans des régions d'actions de commande non testées dans la zone de l'espace de données (I) avec des situations de procès connues et/ou dans des zones de l'espace de données (II) avec des situations de procès complètement inconnues, des points de données artificiels sont insérés.
